(19) Europäisches Patentamt
European Patent Office
Office européen des brevets

(11) **EP 4 317 276 A1**

(12) **EUROPEAN PATENT APPLICATION**
published in accordance with Art. 153(4) EPC

(43) Date of publication:
**07.02.2024 Bulletin 2024/06**

(21) Application number: **22780857.3**

(22) Date of filing: **29.03.2022**

(51) International Patent Classification (IPC):
***C08J 9/16*** *(2006.01)*

(52) Cooperative Patent Classification (CPC):
**C08J 9/16**

(86) International application number:
**PCT/JP2022/015294**

(87) International publication number:
**WO 2022/210646 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021055661**

(71) Applicant: **Kaneka Corporation
Osaka-shi, Osaka 530-8288 (JP)**

(72) Inventors:
- **OTANI, Shunsuke
  Settsu-shi, Osaka 566-0072 (JP)**
- **GODA, Takayuki
  Settsu-shi, Osaka 566-0072 (JP)**

(74) Representative: **Vossius & Partner
Patentanwälte Rechtsanwälte mbB
Siebertstrasse 3
81675 München (DE)**

(54) **POLYPROPYLENE RESIN EXTRUDED FOAM PARTICLES**

(57)    An object is to provide polypropylene-based resin extruded expanded particles that have a low open cell ratio and that are inexpensively obtainable. Provide is polypropylene-based resin extruded expanded particles obtained by extrusion expansion of a resin composition that contains a polypropylene-based resin which has a branched structure and a polypropylene-based resin which has a specific weight average molecular weight and a specific flexural modulus and in which a branched structure is not introduced.

EP 4 317 276 A1

**Description**

Technical Field

The present invention relates to polypropylene-based resin extruded expanded particles.

Background Art

Polypropylene-based resin foamed molded products obtained with use of polypropylene-based resin expanded particles have characteristics, which are advantages of foamed molded articles, such as capability of being formed in any shape, shock-absorbing properties, lightweight properties, and heat insulating properties.

Examples of a method of producing polypropylene-based resin expanded particles include (i) a batch foaming method that is a discontinuous process and (ii) an extrusion foaming method that is a continuous process. The extrusion foaming method has many advantages in terms of, for example, efficiency and environment.

Examples of a technique for obtaining polypropylene-based resin expanded particles by an extrusion foaming method include techniques disclosed in Patent Literatures 1 and 2.

Patent Literature 1 discloses polypropylene-based resin expanded particles obtained by the following method. Specifically, a base resin, a crosslinking aid, and a blowing agent are melted and kneaded in an extruder, the base resin containing, as a main component, a polypropylene-based resin which has a Z average molecular weight Mz of at least $2.0 \times 10^6$ and a Mz/Mw (weight average molecular weight) of not less than 3.0 and which has a camel-shaped molecular weight distribution curve with a curve projection indicating that a branched polymer is included in a polymer region. A resulting mixture is subjected to extrusion expansion through the extruder so as to be cut. The polypropylene-based resin expanded particles are thus obtained.

Patent Literature 2 discloses a polypropylene-based resin composition that contains a specific amount of a polypropylene-based resin (A) and a specific amount of a crosslinked polypropylene (B) obtained by electron beam irradiation and that satisfies the following requirements (a) and (b): (a) the requirement that a melt flow rate (MFR) at 230°C and a load of 2160 g is 0.5 g/10 minutes to 10 g/10 minutes; and (b) the requirement that a gel fraction is 0.05% to 20%.

Citation List

[Patent Literature]

 [Patent Literature 1]
 Japanese Patent Application Publication Tokukaihei No. 9-249763
 [Patent Literature 2]
 Japanese Patent Application Publication Tokukai No. 2000-159950

Summary of Invention

Technical Problem

However, the above-described conventional techniques, which are insufficient from the viewpoint of polypropylene-based resin extruded expanded particles that have a low open cell ratio and that are inexpensively obtainable, have room for further improvement.

An embodiment of the present invention has been made in view of the above problem, and an object thereof is to provide novel polypropylene-based resin extruded expanded particles that have a low open cell ratio and that are inexpensively obtainable.

Solution to Problem

That is, polypropylene-based resin extruded expanded particles in accordance with an embodiment of the present invention is obtained by extrusion expansion of a resin composition that contains a polypropylene-based resin (A) which has a branched structure and a polypropylene-based resin (B) in which a branched structure is not introduced, wherein the polypropylene-based resin (B) in which a branched structure is not introduced has a weight average molecular weight of not less than 500,000 and a flexural modulus of not less than 950 MPa.

Advantageous Effects of Invention

An embodiment of the present invention brings about an effect of making it possible to provide polypropylene-based resin extruded expanded particles that have a low open cell ratio and that are inexpensively obtainable.

Description of Embodiments

The following description will discuss an embodiment of the present invention. The present invention is not, however, limited to these embodiments. The present invention is not limited to the configurations described below, but may be altered in various ways within the scope of the claims. The present invention also encompasses, in its technical scope, any embodiment or example derived by combining technical means disclosed in differing embodiments or examples. Furthermore, it is possible to form a new technical feature by combining technical means disclosed in differing embodiments. All academic and patent documents cited herein are incorporated herein by reference. Any numerical range expressed as "A to B" herein means "not less than A and not more than B (i.e., a range from A to B which includes both A and B)" unless otherwise stated.

A copolymer containing, as structural units, a structural unit derived from an $X^1$ monomer, a structural unit derived from an $X^2$ monomer, ... and an $X^n$ monomer (n is an integer not less than 3) is also referred to as an "$X^1/X^2/.../X^n$ copolymer" unless otherwise stated herein. The $X^1/X^2/.../X^n$ copolymer is not limited to any particular polymerization form unless otherwise explicitly stated, but may be a random copolymer, an alternating copolymer, a block copolymer, or a graft copolymer.

[1. Technical idea of embodiment of present invention]

In a case where polypropylene-based extruded expanded particles are produced by an extrusion foaming method, it is necessary to foam a completely melted resin composition. Thus, in a case where polypropylene-based resin extruded expanded particles are produced by the extrusion foaming method with use of a polypropylene-based resin (linear polypropylene-based resin) in which a branched structure is not introduced, a resin composition cannot endure expandability due to its low viscosity during expansion, so that a cell can be broken. Since resulting extruded expanded particles have a high open cell ratio, the extruded expanded particles may shrink during molding, and it may be impossible to obtain a foamed molded product having a good quality. As a technique for solving this problem, a method is proposed in which a polypropylene-based resin that has a branched structure is used, as disclosed in, for example, Patent Literatures 1 and 2. As compared with a polypropylene-based resin in which a branched structure is not introduced, a polypropylene-based resin which has a branched structure can have a strain hardening property. This makes it possible to provide extruded expanded particles that have a relatively low open cell ratio.

A polypropylene-based resin which has a branched structure is obtained by, for example, a modification process for introducing a branched structure into a polypropylene-based resin in which a branched structure is not introduced. However, since such a modification process requires high material and processing costs, the polypropylene-based resin which has a branched structure is more expensive than the polypropylene-based resin in which a branched structure is not introduced. Thus, as a market need, polypropylene-based resin extruded expanded particles that have a low open cell ratio and that are inexpensively obtainable are requested to be developed.

In view of the above, the inventors of the present invention conducted diligent studies in order to provide polypropylene-based resin extruded expanded particles that have a low open cell ratio and that are inexpensively obtainable. As a result, surprisingly, the inventors of the present invention uniquely found the following novel findings (1) and (2).

(1) A polypropylene-based resin (B) in which a branched structure is not introduced and which has a weight average molecular weight and a flexural modulus in respective specific ranges is used together with a polypropylene-based resin (A) which has a branched structure. This makes it possible to obtain polypropylene-based resin extruded expanded particles which have an open cell ratio substantially equal to that of polypropylene-based resin extruded expanded particles obtained with use of only the polypropylene-based resin (A) which has a branched structure; and
(2) The polypropylene-based resin (A) which has a branched structure and which is a raw material can be partially replaced with the polypropylene-based resin (B) in which a branched structure is not introduced and which has a weight average molecular weight and a flexural modulus in respective specific ranges. Thus, resulting polypropylene-based extruded expanded particles are more inexpensive than the polypropylene-based extruded expanded particles obtained only with use of the polypropylene-based resin (A) which has a branched structure.

[2. Polypropylene-based resin extruded expanded particles]

Polypropylene-based resin extruded expanded particles in accordance with an embodiment of the present invention is obtained by extrusion expansion of a resin composition that contains a polypropylene-based resin (A) which has a branched structure and a polypropylene-based resin (B) in which a branched structure is not introduced. The polypropylene-based resin (B) in which a branched structure is not introduced has a weight average molecular weight of not less than 500,000 and a flexural modulus of not less than 950 MPa.

The polypropylene-based resin extruded expanded particles can be formed into a polypropylene-based resin foamed molded product by molding (e.g., in-mold foam molding) of the polypropylene-based resin extruded expanded particles. In the present specification, the "polypropylene-based resin extruded expanded particles" may be referred to as "extruded expanded particles", the "polypropylene-based resin extruded expanded particles in accordance with an embodiment of the present invention" may be referred to as the "present extruded expanded particles", the "polypropylene-based resin foamed molded product" may be referred to as a "foamed molded product", and the "polypropylene-based resin foamed molded product in accordance with an embodiment of the present invention" may be referred to as the "present foamed molded product".

The present extruded expanded particles, which have the above-described configuration, have an advantage of having a low open cell ratio and being inexpensively obtainable.

(2-1. Resin composition)

The resin composition contains the polypropylene-based resin (A) which has a branched structure and the polypropylene-based resin (B) in which a branched structure is not introduced. Optionally, the resin composition can further contain an additive such as a cell nucleating agent.

In the present specification, the "polypropylene-based resin which has a branched structure" is intended to mean (a) a polypropylene-based resin in which molecules of a polypropylene-based resin in which a branched structure is not introduced are partially intermolecularly crosslinked with each other and (b) a polypropylene-based resin in which, as a branched chain, a diene compound or the like other than (poly)propylene is introduced in a polypropylene-based resin in which a branched structure is not introduced. In the present specification, the "polypropylene-based resin in which a branched structure is not introduced" may be referred to as a "linear polypropylene-based resin", the "polypropylene-based resin which has a branched structure" may be referred to as a "branched polypropylene-based resin", and the "linear polypropylene-based resin" and the "branched polypropylene-based resin" may be collectively referred to as a "polypropylene-based resin". The linear polypropylene-based resin can be regarded as a raw material of the branched polypropylene-based resin.

In the present specification, a polypropylene-based resin is intended to mean a resin that contains, in a proportion of not less than 50 mol% with respect to 100 mol% of all structural units contained in the resin, structural units derived from a propylene monomer. In the present specification, the "structural units derived from a propylene monomer" may be referred to as "propylene units".

(Polypropylene-based resin A which has branched structure)

The polypropylene-based resin (A) which has a branched structure (branched polypropylene-based resin (A)) can be obtained by introducing a branched structure into a linear polypropylene-based resin. A structure of the branched polypropylene-based resin (A), the structure being derived from the linear polypropylene-based resin that is a raw material, is also referred to as a "main chain".

The main chain of the branched polypropylene-based resin (A) may be (a) a homopolymer of propylene, (b) a block copolymer, an alternating copolymer, a random copolymer, or a graft copolymer that is a copolymer of propylene and a monomer other than propylene, or (c) a mixture of at least two thereof.

The main chain of the branched polypropylene-based resin (A) may have, in addition to the propylene units, one or more structural units derived from a monomer(s) other than a propylene monomer or may have one or more types of such structural units. The "monomer(s) other than a propylene monomer" may be referred to as a "comonomer(s)". The "structural unit(s) derived from a monomer(s) other than a propylene monomer" contained in the main chain of the branched polypropylene-based resin (A) may be referred to as a "comonomer unit(s)". By using, as the raw material of the branched polypropylene-based resin (A), a linear polypropylene-based resin obtained with use of propylene and a comonomer, it is possible to obtain the branched polypropylene-based resin (A) that has a propylene unit and a comonomer unit.

Examples of such a comonomer(s) include monomers such as: (a) $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefin such as cyclopentene, norbornene, and tetracyclo[6,2,11,8,13,6]-4-dodecene; (c) diene such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters include methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters include methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers include styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The main chain of the branched polypropylene-based resin (A) has, as the comonomer unit(s), preferably a structural unit(s) derived from α-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene. Such a configuration provides (a) an advantage such that the branched polypropylene-based resin (A) has a high melt tension and a low gel fraction and (b) an advantage such that the branched polypropylene-based resin (A) makes it possible to provide polypropylene-based resin extruded expanded particles having excellent moldability.

The main chain of the branched polypropylene-based resin (A) is preferably a propylene homopolymer, a polypropylene-based block copolymer, a polypropylene-based alternating copolymer, and/or a polypropylene-based random copolymer, and is more preferably a propylene homopolymer and/or a polypropylene-based random copolymer. The polypropylene-based random copolymer is preferably a copolymer (propylene/ethylene random copolymer) containing a propylene unit and an ethylene unit as a comonomer unit. The amount of the ethylene unit (ethylene content) in 100% by weight of the polypropylene-based random copolymer is preferably 0% to 5.5% by weight, more preferably 0% to 4.0% by weight, and even more preferably 0% to 3.0% by weight. Such a configuration provides (a) an advantage such that the branched polypropylene-based resin (A) has a high melt tension and a low gel fraction and (b) an advantage such that the branched polypropylene-based resin (A) makes it possible to provide polypropylene-based resin extruded expanded particles having excellent moldability.

The branched polypropylene-based resin (A) contains the propylene units in a proportion of preferably not less than 90 mol%, more preferably not less than 93 mol%, even more preferably not less than 94 mol%, and particularly preferably not less than 95 mol%, with respect to 100 mol% of all structural units contained in the branched polypropylene-based resin (A). Such a configuration provides an advantage such that the branched polypropylene-based resin (A) has a high melt tension and a low gel fraction.

(Melt tension)

The melt tension of the branched polypropylene-based resin (A) can be higher than the melt tension of the linear polypropylene-based resin. In the present specification, the "melt tension of the branched polypropylene-based resin (A)" is intended to mean the melt tension of the branched polypropylene-based resin (A) at 200°C. The melt tension of the branched polypropylene-based resin (A) is not particularly limited, and is preferably not less than 1.00 cN, more preferably 1.00 cN to 15.00 cN, more preferably 3.00 cN to 15.00 cN, even more preferably 6.00 cN to 15.00 cN, and particularly preferably 6.00 cN to 12.00 cN. In a case where the melt tension of the branched polypropylene-based resin (A) is not less than 1.00 cN and a composition containing the branched polypropylene-based resin (A) and a blowing agent is completely melted and expanded, the composition has a sufficiently high tension. This makes it possible to prevent a cell in resulting extruded expanded particles from being broken. This provides (a) an advantage such that the resulting extruded expanded particles have excellent moldability and (b) an advantage such that the resulting extruded expanded particles make it possible to provide a foamed molded product having excellent resistance to breakage. In a case where the melt tension of the branched polypropylene-based resin (A) is not more than 15.00 cN, in an extrusion expansion step, a resin pressure (a force with which a melted and kneaded product is to press a pressure gauge provided on a production device) is not excessively high. This makes it possible to achieve a relatively large discharge amount. This provides an advantage of making it possible to obtain extruded expanded particles with high productivity.

In the present specification, the melt tension of the branched polypropylene-based resin (A) is measured with use of a Capilograph 1D (available from TOYO SEIKI SEISAKU-SHO, LTD, Japan). Specifically, the melt tension is measured by the following (1) to (5): (1) a barrel which has a diameter of 9.55 mm and which has been heated to a test temperature (200°C) is filled with a sample resin (the branched polypropylene-based resin (A)) for measurement; (2) next, the sample resin is heated for 10 minutes in the barrel which has been heated to the test temperature (200°C); (3) subsequently, while the sample resin is taken out in a strand shape from a capillary die (diameter: 1.0 mm, length: 10 mm) at a piston falling speed kept constant (10 mm/minute), this strand-like sample resin is caused to pass through a pulley which is for detecting a tension and which is located 350 mm below the capillary die, and then wind-up of the strand-like sample resin is started with use of a wind-up roll; (4) after take- off of the strand-like sample resin becomes stable, the wind-up speed of the strand-like sample resin is increased from an initial speed of 1.0 m/minute to a speed of 200 m/minute at a constant rate in 4 minutes; and (5) a load acting on the pulley, which is equipped with a load cell, at a time when the strand-like sample resin fractures is measured as the melt tension.

(Melting point of branched polypropylene-based resin (A))

The branched polypropylene-based resin (A) has a melting point that is exemplified by, but not particularly limited to, preferably 125°C to 170°C, more preferably 130°C to 170°C, more preferably 135°C to 170°C, more preferably 140°C to 165°C, even more preferably 140°C to 160°C, and particularly preferably 145°C to 155°C. The branched polypropylene-based resin (A) alternatively may have a melting point of not higher than 150°C. The branched polypropylene-based resin (A) that has a melting point in the above-described range provides an advantage such that the extruded expanded particles have a low open cell ratio. (a) The branched polypropylene-based resin (A) that has a melting point of not lower than 125°C provides an advantage such that: there is no possibility of a decrease in dimensional stability of the foamed molded product; there is no possibility of the foamed molded product having insufficient heat resistance; and the foamed molded product tends to have a higher compressive strength. (b) The branched polypropylene-based resin (A) that has a melting point of not higher than 170°C, which makes it possible to mold the extruded expanded particles at a relatively low steam pressure, provides an advantage of making it possible to mold the extruded expanded particles with use of a general-purpose molding machine for polypropylene-based resin expanded particles.

In the present specification, the melting point of the branched polypropylene-based resin (A) is a value determined by measurement by differential scanning calorimetry (hereinafter referred to as a "DSC method"). A specific operational procedure is as follows: (1) the temperature of 5 mg to 6 mg of the branched polypropylene-based resin (A) is increased from 40°C to 220°C at a temperature increase rate of 10°C/min so that the branched polypropylene-based resin (A) is melted; (2) thereafter, the temperature of the melted branched polypropylene-based resin (A) is decreased from 220°C to 40°C at a temperature decrease rate of 10°C/min so that the branched polypropylene-based resin (A) is crystallized; and (3) then, the temperature of the crystallized branched polypropylene-based resin (A) is increased from 40°C to 220°C at a temperature increase rate of 10°C/min. It is possible to determine, as the melting point of the branched polypropylene-based resin (A), a temperature at a peak (melting peak) in a DSC curve of the branched polypropylene-based resin (A) which DSC curve is obtained in the second temperature increase (i.e., in (3)). Note that, in a case where as a result of carrying out the above-described method, a plurality of peaks (melting peaks) are present in the DSC curve of the branched polypropylene-based resin (A), the DSC curve being obtained in the second temperature increase, a temperature at a peak (melting peak) having the greatest melting heat quantity is defined as the melting point of the branched polypropylene-based resin (A). As a differential scanning calorimeter, it is possible to use, for example, a differential scanning calorimeter of a DSC6200 type available from Seiko Instruments Inc.

(MFR of branched polypropylene-based resin (A))

The branched polypropylene-based resin (A) has a melt flow rate (MFR) that is not particularly limited. In the present specification, the "MFR of the branched polypropylene-based resin (A)" is intended to mean the MFR of the branched polypropylene-based resin (A) at 230°C. The MFR of the branched polypropylene-based resin (A) at 230°C is, for example, preferably 0.50 g/10 minutes to 20.00 g/10 minutes, more preferably 1.00 g/10 minutes to 15.00 g/10 minutes, more preferably 2.00 g/10 minutes to 12.00 g/10 minutes, more preferably 2.00 g/10 minutes to 10.00 g/10 minutes, more preferably 2.50 g/10 minutes to 8.00 g/10 minutes, even more preferably 2.50 g/10 minutes to 7.00 g/10 minutes, and particularly preferably 2.50 g/10 minutes to 6.00 g/10 minutes. The MFR of the branched polypropylene-based resin (A) at 230°C may be not less than 3.00 g/10 minutes, may be not less than 3.50 g/10 minute, may be not less than 4.00 g/10 minutes, may be not less than 4.50 g/10 minutes, or may be not less than 5.00 g/10 minutes. The branched polypropylene-based resin (A) that has an MFR in the above-described range provides (a) an advantage such that extruded expanded particles have a low open cell ratio, (b) an advantage such that the extruded expanded particles have excellent moldability, and (b) an advantage such that the extruded expanded particles make it possible to provide a foamed molded product having excellent resistance to breakage. (a) The branched polypropylene-based resin (A) that has an MFR of not less than 0.5 g/10 minutes provides an advantage such that extruded expanded particles obtained from the branched polypropylene-based resin (A) make it possible to provide a foamed molded product which is less deformed and has a good surface property (beautiful surface). (b) The branched polypropylene-based resin (A) that has an MFR of not more than 20.0 g/10 minutes provides an advantage such that a composition containing the branched polypropylene-based resin (A) has good expandability during extrusion expansion of the composition.

In the present specification, the MFR of the branched polypropylene-based resin (A) is a value determined by measurement in accordance with ISO1133 at a temperature of 230°C and a load of 2.16 kg.

(Method of preparing branched polypropylene-based resin (A))

The branched polypropylene-based resin (A) can be obtained by introducing a branched structure into a linear polypropylene-based resin. A method of introducing a branched structure into a linear polypropylene-based resin is exemplified by, but not particularly limited to, (a1) a method of subjecting a linear polypropylene-based resin to irradiation and (a2) a method of melting and kneading a mixture containing a linear polypropylene-based resin, a conjugated diene compound, and a radical polymerization initiator.

Specific examples of the method (a1) include a method disclosed in Published Japanese Translation of PCT International Application, Tokuhyo, No. 2002-542360.

The method (a2) will be described in more detail. In the method (a2), it is possible to obtain the branched polypropylene-based resin (A) by, for example, sequentially carrying out the following (i) to (iv): (i) a mixture containing a linear polypropylene-based resin, a conjugated diene compound, and a radical polymerization initiator is melted and kneaded with use of a device including a die; (ii) a resulting melted and kneaded product is extruded through the die; (iii) the melted and kneaded product thus extruded (also referred to as a strand) is cooled; and (iv) simultaneously with and/or after cooling of the strand, the strand is chopped. Specific examples of the method (a2) include a method disclosed in WO2020/004429.

The method (a2) provides (i) an advantage such that it is possible to stably introduce a branched structure into the linear polypropylene-based resin, and it is possible to achieve high reproducibility in introduction of the branched structure; and/or (ii) an advantage such that without any need for complicated equipment, it is possible to obtain the branched polypropylene-based resin (A) with high productivity. Thus, in an embodiment of the present invention, the branched polypropylene-based resin (A) is preferably the branched polypropylene-based resin obtained by the above-described method (a2). In other words, in an embodiment of the present invention, the branched polypropylene-based resin (A) is preferably a branched polypropylene-based resin that is obtained by melting and kneading a mixture containing a linear polypropylene-based resin, a conjugated diene compound, and a radical polymerization initiator.

(Polypropylene-based resin (B) in which branched structure is not introduced)

The polypropylene-based resin (B) in which a branched structure is not introduced can also be referred to as a linear polypropylene-based resin (B). The polypropylene-based resin (B) in which a branched structure is not introduced (linear polypropylene-based resin (B)) may have a structure identical to the structure of the main chain of the branched polypropylene-based resin (A) (described earlier). For example, the linear polypropylene-based resin (B) may be (a) a homopolymer of propylene, (b) a block copolymer, an alternating copolymer, a random copolymer, or a graft copolymer that is a copolymer of propylene and a monomer other than propylene, or (c) a mixture of at least two thereof.

The linear polypropylene-based resin (B) may have a comonomer unit(s) in addition to the propylene units. Examples of a comonomer(s) include any of the comonomers listed in "(Polypropylene-based resin A which has branched structure)" described earlier. The linear polypropylene-based resin (B) has, as the comonomer unit(s), preferably a structural unit(s) derived from α-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene. Such a configuration provides an advantage of making it possible to provide polypropylene-based resin extruded expanded particles having excellent moldability.

The linear polypropylene-based resin (B) is preferably a propylene homopolymer, a polypropylene-based block copolymer, a polypropylene-based alternating copolymer, and/or a polypropylene-based random copolymer, and is more preferably a propylene homopolymer and/or a polypropylene-based random copolymer. The polypropylene-based random copolymer is preferably a copolymer (propylene/ethylene random copolymer) containing a propylene unit and an ethylene unit as a comonomer unit, and is more preferably a copolymer (propylene / ethylene random copolymer) containing 0.5% by weight to 5.0% by weight of ethylene units. The polypropylene-based random copolymer is, for example, more preferably a propylene/ethylene random copolymer containing 0.5% by weight to 5.0% by weight of ethylene units in 100% by weight of the copolymer. Such a configuration provides an advantage of making it possible to provide extruded expanded particles having excellent moldability.

The linear polypropylene-based resin (B) contains the propylene units in a proportion of preferably not less than 90 mol%, more preferably not less than 93 mol%, even more preferably not less than 94 mol%, and particularly preferably not less than 95 mol%, with respect to 100 mol% of all structural units contained in the linear polypropylene-based resin (B).

(Weight average molecular weight of linear polypropylene-based resin (B))

The linear polypropylene-based resin (B) has a weight average molecular weight of preferably not less than 500,000, preferably not less than 520,000, more preferably not less than 550,000, more preferably not less than 570,000, more preferably not less than 590,000, even more preferably not less than 610,000, and particularly preferably not less than 630,000. In a case where the linear polypropylene-based resin (B) has a weight average molecular weight of not less than 500,000, the linear polypropylene-based resin is entangled with the branched polypropylene-based resin (A). This provides an advantage of (i) preventing impairment of a strain hardening property of the branched polypropylene-based resin (A) and (ii) making it possible to provide extruded expanded particles that have a low open cell ratio. The weight average molecular weight of the linear polypropylene-based resin (B) has an upper limit that is exemplified by, but not particularly limited to, preferably not more than 1,000,000, more preferably not more than 900,000, more preferably not more than 850,000, more preferably not more than 800,000, even more preferably not more than 750,000, and particularly preferably not more than 700,000. In a case where the linear polypropylene-based resin (B) has a weight average molecular weight of not more than 1,000,000, the resin composition containing the branched polypropylene-based resin (A) and the linear polypropylene-based resin (B) has a viscosity that is not excessively high. This provides an advantage of making it possible to obtain extruded expanded particles with high productivity.

It is assumed in the present specification that the weight average molecular weight of the linear polypropylene-based resin (B) is a value obtained by a method of gel permeation chromatography (GPC). Examples of a device used for GPC include Viscotek Triple HT-GPC model-SG system (available from Malvern Instruments Ltd.). A specific measuring method is as follows: (1) the linear polypropylene-based resin (B) is dissolved in an eluent (orthodichlorobenzene (containing 0.05% butylated hydroxytoluene)) to prepare a sample solution containing 0.1% (weight/weight) of the linear polypropylene-based resin (B); and (2) 200 pl of the sample solution is caused to pass through a column (HR 3, 4, 6E available from Nihon Waters K.K.) at a flow rate of 0.3 ml/min and a temperature of 140°C to carry out GPC measurement. Here, polystyrene is used as a standard sample to determine the weight average molecular weight of the linear polypropylene-based resin (B) by comparison conversion. Detection is carried out by a reference flow method with use of a differential refractometer.

(Flexural modulus of linear polypropylene-based resin (B))

The linear polypropylene-based resin (B) has a flexural modulus of not less than 950 MPa, preferably not less than 980 MPa, more preferably not less than 1,000 MPa, even more preferably not less than 1,030 MPa, and particularly preferably not less than 1,050 MPa. The linear polypropylene-based resin (B) that has a flexural modulus of not less than 950 MPa provides an advantage such that a resulting foamed molded product has a high compressive strength. The flexural modulus of the linear polypropylene-based resin (B) has an upper limit that is exemplified by, but not particularly limited to, preferably not more than 1,400 MPa, more preferably not more than 1,350 MPa, more preferably not more than 1,300 MPa, more preferably not more than 1,250 MPa, more preferably not more than 1,200 MPa, even more preferably not more than 1,150 MPa, and particularly preferably not more than 1,100 MPa. The linear polypropylene-based resin (B) that has a flexural modulus of not more than 1,400 MPa provides an advantage such that a resulting foamed molded product is less likely to be broken.

It is assumed in the present specification that the flexural modulus of the linear polypropylene-based resin (B) is a value obtained by a method in accordance with JIS K 7171.

(Tensile modulus of linear polypropylene (B))

The linear polypropylene-based resin (B) has a tensile modulus that is not particularly limited and is preferably not less than 900 MPa, not less than 925 MPa, not less than 950 MPa, not less than 975 MPa, even more preferably not less than 1,000 MPa, and particularly preferably not less than 1,025 MPa. The linear polypropylene-based resin (B) that has a tensile modulus of not less than 900 MPa provides an advantage such that a resulting foamed molded product has a high tensile strength. The tensile modulus of the linear polypropylene-based resin (B) has an upper limit that is exemplified by, but not particularly limited to, preferably not more than 1,300 MPa, more preferably not more than 1,250 MPa, more preferably not more than 1,200 MPa, even more preferably not more than 1,150 MPa, and particularly preferably not more than 1,100 MPa. The linear polypropylene-based resin (B) that has a tensile modulus of not more than 1,300 MPa provides an advantage such that a resulting foamed molded product is less likely to be broken.

It is assumed in the present specification that the tensile modulus of the linear polypropylene-based resin (B) is a value obtained by a method in accordance with JIS K 7161.

(Deflection temperature under load of linear polypropylene (B))

The linear polypropylene-based resin (B) has a deflection temperature under load that is not particularly limited and is preferably not lower than 82°C, more preferably not lower than 84°C, more preferably not lower than 86°C, even more preferably not lower than 88°C, and particularly preferably not lower than 90°C. The linear polypropylene-based resin (B) that has a deflection temperature under load of not lower than 82°C provides an advantage of enabling a resulting foamed molded product to maintain a high compressive strength even under a high-temperature environment. The deflection temperature under load of the linear polypropylene-based resin (B) has an upper limit that is exemplified by, but not particularly limited to, preferably not higher than 125°C, more preferably not higher than 120°C, more preferably not higher than 115°C, more preferably not higher than 110°C, more preferably not higher than 105°C, even more preferably not higher than 100°C, and particularly preferably not higher than 95°C. The linear polypropylene-based resin (B) that has a deflection temperature under load of not higher than 125°C provides an advantage such that a resulting foamed molded product is less likely to be broken.

It is assumed in the present specification that the deflection temperature under load of the linear polypropylene-based resin (B) is a value obtained by a method in accordance with JIS K 7191.

The linear polypropylene-based resin (B) has a melting point that is exemplified by, but not particularly limited to, preferably 125°C to 170°C, more preferably 130°C to 170°C, more preferably 135°C to 170°C, more preferably 140°C to 165°C, more preferably 140°C to 160°C, more preferably 140°C to 155°C, even more preferably 140°C to 150°C, and particularly preferably 143°C to 150°C. The linear polypropylene-based resin (B) that has a melting point in the above-described range provides an advantage such that the extruded expanded particles have a low open cell ratio. (a) The linear polypropylene-based resin (B) that has a melting point of not lower than 125°C provides an advantage such that: there is no possibility of a decrease in dimensional stability of the foamed molded product; there is no possibility of the foamed molded product having insufficient heat resistance; and the foamed molded product tends to have a higher compressive strength. (b) The linear polypropylene-based resin (B) that has a melting point of not higher than 170°C, which makes it possible to mold the extruded expanded particles at a relatively low steam pressure, provides an advantage of making it possible to mold the extruded expanded particles with use of a general-purpose molding machine for polypropylene-based resin expanded particles.

In the present specification, the melting point of the linear polypropylene-based resin (B) is a value determined by measurement by the DSC method. A specific operational procedure for the DSC method for the linear polypropylene-based resin (B) is identical to the operational procedure for the DSC method for the branched polypropylene-based resin (A) (described earlier) except that the branched polypropylene-based resin (A) is replaced with the linear polypropylene-based resin (B). It is possible to determine, as the melting point of the linear polypropylene-based resin (B), a temperature at a peak (melting peak) in a DSC curve of the linear polypropylene-based resin (B) which DSC curve is obtained in the second temperature increase (i.e., in (3)). Note that, in a case where as a result of carrying out the above-described method, a plurality of peaks (melting peaks) are present in the DSC curve of the linear polypropylene-based resin (B), the DSC curve being obtained in the second temperature increase, a temperature at a peak (melting peak) having the greatest melting heat quantity is defined as the melting point of the linear polypropylene-based resin (B).

The MFR of the linear polypropylene-based resin (B) is not particularly limited. In the present specification, the "MFR of the linear polypropylene-based resin (B)" is intended to mean the MFR of the linear polypropylene-based resin (B) at 230°C. The MFR of the linear polypropylene-based resin (B) at 230°C is, for example, preferably 0.20 g/10 minutes to 20.00 g/10 minutes, more preferably 0.20 g/10 minutes to 15.00 g/10 minutes, even more preferably 0.20 g/10 minutes to 12.00 g/10 minutes, more preferably 0.20 g/10 minutes to 10.00 g/10 minutes, more preferably 0.20 g/10 minutes to 8.00 g/10 minutes, more preferably 0.20 g/10 minutes to 6.00 g/10 minutes, more preferably 0.20 g/10 minutes to 4.00 g/10 minutes, more preferably 0.20 g/10 minutes to 2.00 g/10 minutes, even more preferably 0.20 g/10 minutes to 1.50 g/10 minutes, and particularly preferably 0.20 g/10 minutes to 1.00 g/10 minutes. The linear polypropylene-based resin (B) that has an MFR in the above-described range provides an advantage of making it possible to obtain a foamed molded product having a good surface property (beautiful surface).

Note here that the "MFR of the branched polypropylene-based resin (A) at 230°C" is defined as an "MFR (A)", and the "MFR of the linear polypropylene-based resin (B) at 230°C" is defined as an "MFR (B)". The MFR (B) is preferably lower than the MFR (A). A difference between the MFR (A) and the MFR (B) (a value obtained by subtracting a value of the MFR (B) from a value of the MFR (A)) is preferably not less than 0.50 g/10 minutes, more preferably not less than 1.00 g/10 minutes, more preferably not less than 1.50 g/10 minutes, even more preferably not less than 2.00 g/10 minutes, and particularly preferably not less than 2.30 g/10 minutes. The difference between the MFR (A) and the MFR (B) may be not less than 2.50 g/10 minutes, may be not less than 2.80 g/10 minutes, may be not less than 3.00 g/10 minutes, may be not less than 3.30 g/10 minutes, may be not less than 3.50 g/10 minutes, may be not less than 3.80 g/10 minutes, may be not less than 4.00 g/10 minutes, may be not less than 4.30 g/10 minutes, may be not less than 4.50 g/10 minutes, or may be not less than 4.80 g/10 minutes. According to such a configuration, the linear polypropylene-based resin (B) is entangled with the branched polypropylene-based resin (A). This provides an advantage of making it less likely to impair the strain hardening property of the branched polypropylene-based resin (A).

In the present specification, the MFR of the linear polypropylene-based resin (B) is a value determined by measurement in accordance with ISO1133 at a temperature of 230°C and a load of 2.16 kg.

A weight ratio (weight of the branched polypropylene-based resin (A) : weight of the linear polypropylene-based resin (B)) between the branched polypropylene-based resin (A) and the linear polypropylene-based resin (B) that are contained in the resin composition is not particularly limited and is preferably 20:80 to 80:20, more preferably 30:70 to 70:30, even more preferably 40:60 to 60:40, and particularly preferably 45:55 to 55:45. The weight ratio that is in the above range makes it possible to inexpensively obtain polypropylene-based resin extruded expanded particles without losing the strain hardening property, which is a characteristic of the branched polypropylene-based resin (A). The branched polypropylene-based resin (A) that is contained in the resin composition in a lower ratio, i.e., the linear polypropylene-based resin (B) that is contained in the resin composition in a higher ratio makes it possible to obtain polypropylene-based resin extruded expanded particles more inexpensively.

(Another resin and rubber)

The resin composition may further contain: a resin (hereinafter also referred to as "another resin") other than the branched polypropylene-based resin (A) and the linear polypropylene-based resin (B); and/or rubber provided that an effect in accordance with an embodiment of the present invention is not impaired. The another resin and the rubber may be collectively referred to as "another resin and the like". Examples of the another resin other than the branched polypropylene-based resin (A) and the linear polypropylene-based resin (B) include: (a) linear polypropylene-based resins (e.g., a linear polypropylene-based resin having a weight average molecular weight of less than 500,000 or having a flexural modulus of less than 950 MPa) other than the linear polypropylene-based resin (B); (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; and (c) styrene-based resins such as polystyrene, a styrene/maleic anhydride copolymer, and a styrene/ethylene copolymer. Examples of the rubber include olefin-based rubbers such as ethylene/propylene rubber, ethylene/butene rubber, ethylene/hexene rubber, and ethylene/octene rubber. A total amount of the another resin and the rubber that are contained in the resin composition is not particularly limited. The total amount of the another resin and the rubber that are contained in the resin composition is, for example, preferably 1 part by weight to 10 parts by weight, and more preferably 2 parts by weight to 5 parts by weight, relative to 100 parts by weight of a total of the branched polypropylene-based resin (A) and the linear polypropylene-based resin (B).

(Cell nucleating agent)

The resin composition may contain a cell nucleating agent. In other words, the cell nucleating agent may be used to produce the present extruded expanded particles. Use of the cell nucleating agent makes it possible to control the number and the shape of cells of resulting polypropylene-based resin extruded expanded particles.

Examples of the cell nucleating agent include a sodium bicarbonate-citric acid mixture, monosodium citrate, talc, and calcium carbonate. One of these cell nucleating agents may be used solely, or at least two of these cell nucleating agents may be used in combination.

The amount of the cell nucleating agent contained in the resin composition, i.e., the amount of the cell nucleating agent used to produce the extruded expanded particles is not particularly limited. The cell nucleating agent is contained in an amount of, for example, preferably 0.01 parts by weight to 5.00 parts by weight, more preferably 0.01 parts by weight to 3.50 parts by weight, even more preferably 0.01 parts by weight to 1.00 parts by weight, and particularly preferably 0.01 parts by weight to 0.50 parts by weight, relative to 100 parts by weight of the polypropylene-based resin. Such a configuration provides an advantage such that the extruded expanded particles tend to have a uniform average cell diameter and a uniform cell shape and consequently expandability during extrusion expansion tends to be easily stabilized.

(Other component(s))

As necessary, the resin composition may further contain, as other component(s), (a) a stabilizer(s) such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive(s) such as a crosslinking agent, a chain transfer agent, a lubricant, a plasticizer, a filler, a reinforcer, a flame retardant, a coloring agent, a hydrating agent, and/or an antistatic agent. One of these other components may be used solely, or at least two of these other components may be used in combination. A total amount of the other component(s) contained in the resin composition is not particularly limited. The total amount of the other component(s) contained in the resin composition is, for example, preferably 0.01 parts by weight to 50.00 parts by weight, and more preferably 0.05 parts by weight to 30.00 parts by weight, relative to 100 parts by weight of the total of the branched polypropylene-based resin (A) and the linear polypropylene-based resin (B).

(Open cell ratio of polypropylene-based resin extruded expanded particles)

It is more preferable that the present extruded expanded particles have a lower open cell ratio. The present extruded expanded particles has an open cell ratio of preferably not more than 44.0%, more preferably not more than 42.0%, more preferably not more than 40.0%, more preferably not more than 38.0%, even more preferably not more than 36.0%, and particularly preferably not more than 34.0%. The open cell ratio of the present polypropylene-based resin extruded expanded particles has a lower limit that is exemplified by, but not particularly limited to, not less than 0.0%. The extruded expanded particles that have an open cell ratio in the above-described range provide (a) an advantage such that the extruded expanded particles have excellent moldability because cells of the extruded expanded particles are hardly broken and shrunk during molding of the extruded expanded particles, and (b) an advantage such that a foamed molded product obtained with use of the extruded expanded particles further exhibits characteristics such as capability of being formed in any shape, shock-absorbing properties, lightweight properties, compressive strength, and heat insulating properties.

In the present specification, the open cell ratio of the polypropylene-based resin extruded expanded particles is a value determined by measurement with use of an air-comparison pycnometer [Model 1000, available from Tokyo-Science Co., Ltd.] in accordance with a method described in PROCEDURE C of ASTM D2856-87. Specifically, the open cell ratio of the extruded expanded particles is calculated by sequentially carrying out the following (1) to (3): (1) a volume Vc (cm$^3$) of the extruded expanded particles is measured with use of the air-comparison pycnometer; (2) subsequently, the whole extruded expanded particles whose Vc has been measured are submerged in ethanol contained in a graduated cylinder; (3) thereafter, an apparent volume Va (cm$^3$) of the extruded expanded particles is determined from the amount of increase in position of the ethanol in the graduated cylinder; and (4) the open cell ratio of the extruded expanded particles is calculated by the following expression: Open cell ratio (%) = ((Va-Vc) × 100) / Va This method of measuring the volume Va is also referred to as a submersion method.

(Expansion ratio of polypropylene-based resin extruded expanded particles)

The present extruded expanded particles have an expansion ratio of preferably 3 times to 40 times, more preferably 3 times to 35 times, more preferably 3 times to 30 times, more preferably 3 times to 28 times, even more preferably 3 times to 28 times, and particularly preferably 3 times to 25 times. The above configuration provides an advantage such that a polypropylene-based resin foamed molded product obtained with use of the extruded expanded particles further exhibits characteristics such as capability of being formed in any shape, shock-absorbing properties, lightweight properties, and heat insulating properties.

In the present specification, the expansion ratio of the polypropylene-based resin extruded expanded particles is calculated by the following method: (1) a weight w (g) of the extruded expanded particles is measured; (2) next, the extruded expanded particles used to measure the weight are submerged in ethanol in a graduated cylinder, and a volume v (cm$^3$) of the extruded expanded particles is measured on the basis of an increase in liquid surface position in the graduated cylinder; (3) the weight w (g) is divided by the volume v (cm$^3$), and a density $\rho_1$ of the extruded expanded particles is calculated; and (4) a density $\rho_2$ of a base resin of the extruded expanded particles is divided by the density $\rho_1$ of the extruded expanded particles ($\rho_2/\rho_1$), and a resulting value is defined as the expansion ratio. In the present specification, the base resin can be regarded as a resin component that substantially constitutes the extruded expanded particles. The density $\rho_2$ of the base resin may be a density of 0.9 g/cm$^3$ of a common polypropylene-based resin.

(Method of producing polypropylene-based resin extruded expanded particles)

A method of producing the present extruded expanded particles is not particularly limited and may be a known extrusion foaming method. Examples of an aspect of the method of producing the present extruded expanded particles include the following aspect: A method of producing polypropylene-based resin extruded expanded particles, the method including: a first step of melting and kneading (i) a resin composition that contains a polypropylene-based resin (A) which has a branched structure and a polypropylene-based resin (B) in which a branched structure is not introduced and (ii) a blowing agent in a production device; and a second step of discharging, through a die to a region having a pressure lower than an internal pressure of the production device, a melted and kneaded product obtained in the first step, wherein the polypropylene-based resin (B) in which a branched structure is not introduced has a weight average molecular weight

of not less than 500,000 and a flexural modulus of not less than 950 MPa.

Since the method of producing polypropylene-based resin extruded expanded particles in accordance with an embodiment of the present invention has the above-described configuration, it is possible to inexpensively provide extruded expanded particles that have a low open cell ratio.

(First step)

The first step will be described in detail. Specific examples of the first step include a step of melting, in the production device, the resin composition containing the branched polypropylene-based resin (A), the linear polypropylene-based resin (B) so as to dissolve the blowing agent in the resin composition. The first step can also be referred to as a step of preparing the melted and kneaded product containing the resin composition and the blowing agent.

(Blowing agent)

The blowing agent which can be used in the method of producing the present extruded expanded particles is not particularly limited, provided that the blowing agent is a commonly used blowing agent which is used in extrusion expansion. Examples of the blowing agent include: (a) physical blowing agents such as (a-1) aliphatic hydrocarbons such as propane, normal butane, isobutane, normal pentane, isopentane, and hexane, (a-2) alicyclic hydrocarbons such as cyclopentane and cyclobutane, (a-3) ethers such as dimethyl ether, diethyl ether, and methyl ethyl ether, (a-4) alcohols such as methanol and ethanol, (a-5) inorganic gases such as air, nitrogen and carbon dioxide, and (a-6) water; and (b) chemical blowing agents including pyrolytic blowing agents such as sodium bicarbonate, azodicarbonamide, and dinitroso pentamethylene tetramine.

In the present production method, the blowing agent is preferably inorganic gas and water, and more preferably carbon dioxide in order to achieve a low production cost and a low environmental load.

An amount of the blowing agent used is not particularly limited and only needs to be adjusted as appropriate in accordance with a type of the blowing agent and/or a target expansion ratio of the polypropylene-based resin extruded expanded particles. For example, the blowing agent may be used in an amount of 0.50 parts by weight to 7.00 parts by weight, 0.50 parts by weight to 6.00 parts by weight, 0.50 parts by weight to 5.00 parts by weight, 0.50 parts by weight to 4.00 parts by weight, or 0.50 parts by weight to 3.00 parts by weight, relative to a weight of 100.00 parts by weight of a resin mixture.

In the first step, it is possible, as necessary, to further use a cell nucleating agent, a stabilizer(s) (e.g., an antioxidant, a metal deactivator, a phosphorous processing stabilizer, an ultraviolet absorber, an ultraviolet stabilizer, a fluorescent brightening agent, metallic soap, an antacid adsorbent, and/or the like), and an additive(s) (e.g., an inorganic coloring agent, an organic coloring agent, a crosslinking agent, a chain transfer agent, a lubricant, a plasticizer, a filler, a reinforcer, a pigment, a dye, a flame retardant, a hydrating agent, an antistatic agent, and/or the like).

In the first step, the resin composition and the blowing agent, as well as other component(s) that can be optionally used, may be mixed before being fed to the production device or may be mixed in the production device. In other words, in the first step, the resin composition may be fed to the production device, or the resin composition may be prepared (completed) in the production device. In the first step, there is no particular limitation to a method and an order in which (i) the resin composition, the blowing agent, and other component(s) that can be optionally used are mixed or (ii) the resin composition, the blowing agent, and other component(s) that can be optionally used are fed to the production device.

The melted and kneaded product obtained in the first step may be cooled before being extruded into a low pressure region.

(Second step)

The second step is a step of extruding, through a die to a region having a pressure lower than an internal pressure of the production device, the melted and kneaded product obtained in the first step, and chopping the extruded melted and kneaded product. Through the second step, extruded expanded particles are obtained. Thus, the second step can also be referred to as a granulation step of granulating polypropylene-based resin extruded expanded particles.

In the second step, a region into which the melted and kneaded product obtained in the first step is to be extruded is not particularly limited, provided that the region has a pressure lower than the internal pressure of the production device. For example, in the second step, the melted and kneaded product obtained in the first step may be extruded into a gas phase or may be extruded into a liquid phase.

The melted and kneaded product extruded, in the second step, into the region that has a pressure lower than the internal pressure of the production device starts to expand immediately. In the second step, the melted and kneaded product that is expanding may be chopped, or the melted and kneaded product that has finished expanding may be chopped. In a case where the melted and kneaded product that is expanding is chopped, the chopped melted and kneaded product can complete expanding in the region into which the melted and kneaded product has been extruded.

Depending on the region into which the melted and kneaded product obtained in the first step is to be extruded and a method of chopping the melted and kneaded product, the second step (granulation step) can be roughly classified into two types, i.e., a cold cutting method and a die face cutting method. The cold cutting method may be a method in which (i) the melted and kneaded product that has been extruded through the die and that contains the blowing agent is expanded, and (ii) an expanded product in the form of strands is taken up while being cooled and then is chopped (strand cut method). The die face cutting method is a method in which the melted and kneaded product that has been extruded through holes of the die is cut with a cutter that rotates while being in contact with a surface of the die or while ensuring a small gap between the cutter and the surface of the die.

The die face cutting method is further classified into the following three methods on the basis of a difference in cooling method. Specifically, the three methods are an underwater cutting (hereinafter sometimes referred to as "UWC") method, a watering cutting (hereinafter sometimes referred to as "WRC") method, and a hot cutting (hereinafter sometimes referred to as "HC") method. The UWC method is a method in which (i) a chamber attached to a tip of the die is filled with cooling water, which has been adjusted to have a predetermined pressure, so that the cooling water is in contact with a resin discharge surface of the die, and (ii) the melted and kneaded product that has been extruded through the holes of the die is cut in water. The WRC method is a method in which a cooling drum that is connected to the die and that has an inner peripheral surface along which cooling water flows is disposed downstream of the die, and the melted and kneaded product that has been cut with the cutter in air is cooled by the cooling water while being expanded or after being expanded. The HC method is a method in which the melted and kneaded product is cut with the cutter in air, and the cut melted and kneaded product is cooled in air while being expanded or after being expanded. The HC method also includes a mist cutting method that further includes a step of spraying mixed mist of water and air.

[3. Polypropylene-based resin foamed molded product]

The polypropylene-based resin foamed molded product in accordance with an embodiment of the present invention is obtained by molding the polypropylene-based resin extruded expanded particles disclosed in [2. Polypropylene-based resin extruded expanded particles].

For matters (e.g., base resin and open cell ratio) other than those detailed below, the descriptions in [2. Polypropylene-based resin extruded expanded particles] apply as appropriate.

A method of molding extruded expanded particles is exemplified by, but not particularly limited to, in-mold foam molding with use of a mold including a fixed mold that cannot be driven and a movable mold that can be driven. An in-mold foam molding method is not particularly limited and may be a known in-mold foam molding method.

[4. Application of polypropylene-based resin extruded expanded particles and polypropylene-based resin foamed molded product]

The polypropylene-based resin extruded expanded particles in accordance with an embodiment of the present invention and the polypropylene-based resin foamed molded product in accordance with an embodiment of the present invention can be suitably used in the fields of, for example, automotive interior materials, shock-absorbing materials, packaging materials, and heat insulating materials.

An embodiment of the present invention may be configured as below.

<1> Polypropylene-based resin extruded expanded particles obtained by extrusion expansion of a resin composition that contains a polypropylene-based resin (A) which has a branched structure and a polypropylene-based resin (B) in which a branched structure is not introduced, wherein the polypropylene-based resin (B) in which a branched structure is not introduced has a weight average molecular weight of not less than 500,000 and not more than 1,000,000 and a flexural modulus of not less than 950 MPa and not more than 1,400 MPa.

<2> The polypropylene-based resin extruded expanded particles described in <1>, wherein the polypropylene-based resin (B) has a tensile modulus of not less than 900 MPa and not more than 1,300 MPa.

<3> The polypropylene-based resin extruded expanded particles described in <1> or <2>, wherein the polypropylene-based resin (B) has a deflection temperature under load of not lower than 82°C and not higher than 125°C.

<4> The polypropylene-based resin extruded expanded particles described in any one of <1> to <3>, wherein the polypropylene-based resin (A) has a melt tension of not less than 1.00 cN and not more than 15.00 cN at 200°C.

<5> The polypropylene-based resin extruded expanded particles described in any one of <1> to <4>, wherein the polypropylene-based resin (A) has a melting point of 125°C to 170°C.

<6> The polypropylene-based resin extruded expanded particles described in any one of <1> to <5>, wherein the polypropylene-based resin (A) has a melt flow rate (MFR) of 0.50 g/10 minutes to 20.00 g/10 minutes at 230°C.

<7> The polypropylene-based resin extruded expanded particles described in any one of <1> to <6>, wherein the polypropylene-based resin (B) has a melting point of 125°C to 170°C.

<8> The polypropylene-based resin extruded expanded particles described in any one of <1> to <7>, wherein the polypropylene-based resin (B) has a melt flow rate (MFR) of 0.20 g/10 minutes to 20.00 g/10 minutes at 230°C.

<9> The polypropylene-based resin extruded expanded particles described in any one of <1> to <8>, wherein the polypropylene-based resin (A) and the polypropylene-based resin (B) are contained in the resin composition at a weight ratio (weight of the polypropylene-based resin (A) : weight of the polypropylene-based resin (B)) of 20:80 to 80:20.

<10> The polypropylene-based resin extruded expanded particles described in any one of <1> to <9>, wherein the polypropylene-based resin (A) has a main chain that is at least one selected from the group consisting of a propylene homopolymer, a polypropylene-based block copolymer, and a polypropylene-based random copolymer.

<11> The polypropylene-based resin extruded expanded particles described in any one of <1> to <10>, wherein the polypropylene-based resin (A) is a polypropylene-based resin that has a branched structure and that is obtained by melting and kneading a mixture containing a polypropylene-based resin in which a branched structure is not introduced, a conjugated diene compound, and a radical polymerization initiator.

<12> The polypropylene-based resin extruded expanded particles described in any one of <1> to <11>, wherein the polypropylene-based resin (B) is at least one selected from the group consisting of a propylene homopolymer, a polypropylene-based block copolymer, and a polypropylene-based random copolymer.

<13> The polypropylene-based resin extruded expanded particles described in any one of <1> to <12>, wherein a difference between an MFR (A) and an MFR (B) (a value obtained by subtracting a value of the MFR (B) from a value of the MFR (A)) is not less than 0.50 g/10 minutes where the MFR (A) is a melt flow rate (MFR) of the polypropylene-based resin (A) at 230°C, and the MFR (B) is the MFR of the polypropylene-based resin (B) at 230°C.

<14> The polypropylene-based resin extruded expanded particles described in any one of <1> to <13>, wherein the polypropylene-based resin extruded expanded particles have an open cell ratio of not more than 44.0%.

<15> The polypropylene-based resin extruded expanded particles described in any one of <1> to <14>, wherein the polypropylene-based resin extruded expanded particles have an expansion ratio of 3 times to 24 times.

<16> A polypropylene-based resin foamed molded product obtained by molding polypropylene-based resin extruded expanded particles described in any one of <1> to <15>.

<17> A method of producing polypropylene-based resin extruded expanded particles, the method including: a first step of melting and kneading (i) a resin composition that contains a polypropylene-based resin (A) which has a branched structure and a polypropylene-based resin (B) in which a branched structure is not introduced and (ii) a blowing agent in a production device; and a second step of discharging, through a die to a region having a pressure lower than an internal pressure of the production device, a melted and kneaded product obtained in the first step, wherein the polypropylene-based resin (B) in which a branched structure is not introduced has a weight average molecular weight of not less than 500,000 and a flexural modulus of not less than 950 MPa.

<18> The method described in <17>, wherein the polypropylene-based resin (B) has a tensile modulus of not less than 900 MPa.

<19> The method described in <17> or <18>, wherein the polypropylene-based resin (B) has a deflection temperature under load of not lower than 82°C.

<20> The method described in any one of <17> to <19>, wherein the polypropylene-based resin (A) has a melt tension of not less than 1.00 cN at 200°C.

<21> The method described in any one of <17> to <20>, wherein the polypropylene-based resin (A) has a melting point of 125°C to 170°C.

<22> The method described in any one of <17> to <21>, wherein the polypropylene-based resin (A) has a melt flow rate (MFR) of 0.50 g/10 minutes to 20.00 g/10 minutes at 230°C.

<23> The method described in any one of <17> to <22>, wherein the polypropylene-based resin (B) has a melting point of 125°C to 170°C.

<24> The method described in any one of <17> to <23>, wherein the polypropylene-based resin (B) has a melt flow rate (MFR) of 0.20 g/10 minutes to 20.00 g/10 minutes at 230°C.

<25> The method described in any one of <17> to <24>, wherein the polypropylene-based resin (A) and the polypropylene-based resin (B) are contained in the resin composition at a weight ratio (weight of the polypropylene-based resin (A) : weight of the polypropylene-based resin (B)) of 20:80 to 80:20.

<26> The method described in any one of <17> to <25>, wherein the blowing agent is carbon dioxide.

<27> The method described in any one of <17> to <26>, wherein the polypropylene-based resin (A) has a main chain that is at least one selected from the group consisting of a propylene homopolymer, a polypropylene-based block copolymer, and a polypropylene-based random copolymer.

<28> The method described in any one of <17> to <27>, wherein the polypropylene-based resin (A) is a polypropylene-based resin that has a branched structure and that is obtained by melting and kneading a mixture containing a polypropylene-based resin in which a branched structure is not introduced, a conjugated diene compound, and a radical polymerization initiator.

<29> The method described in any one of <17> to <28>, wherein the polypropylene-based resin (B) is at least one selected from the group consisting of a propylene homopolymer, a polypropylene-based block copolymer, and a polypropylene-based random copolymer.

<30> The method described in any one of <17> to <29>, wherein a difference between an MFR (A) and an MFR (B) (a value obtained by subtracting a value of the MFR (B) from a value of the MFR (A)) is not less than 0.50 g/10 minutes where the MFR (A) is a melt flow rate (MFR) of the polypropylene-based resin (A) at 230°C, and the MFR (B) is the MFR of the polypropylene-based resin (B) at 230°C.

<31> The method described in any one of <17> to <30>, wherein the polypropylene-based resin extruded expanded particles have an open cell ratio of not more than 44.0%.

<32> The method described in any one of <17> to <31>, wherein the polypropylene-based resin extruded expanded particles have an expansion ratio of 3 times to 24 times. Examples

The following description will discuss embodiments of the present invention in more detail with reference to Examples and Comparative Examples. Note that the present invention is not limited to Examples below.

(Test methods)

Test methods used to measure and evaluate various physical properties in Examples and Comparative Examples are as follows.

[Melting point (°C)]

The branched polypropylene-based resin (A) and the linear polypropylene-based resin (B) were used as samples to determine the melting points thereof by measurement by differential scanning calorimetry. As a differential scanning calorimeter, a DSC6200 type available from Seiko Instruments Inc. was used. A method in which the melting point of the sample (branched polypropylene-based resin (A) or linear polypropylene-based resin (B)) was measured by differential scanning calorimetry is as follows: (1) the temperature of the sample was increased from 40°C to 220°C at a temperature increase rate of 10°C/minute so that the sample was melted; (2) thereafter, the temperature of the resulting sample was decreased from 220°C to 40°C at a temperature decrease rate of 10°C/minute so that the sample was crystallized; and (3) then, the temperature of the crystallized sample was increased from 40°C to 220°C at a temperature increase rate of 10°C/minute. A temperature at a peak (melting peak) in a DSC curve of the sample which DSC curve was obtained in the second temperature increase (i.e., in (3)) was regarded as the melting point of the sample (the branched polypropylene-based resin (A) or the linear polypropylene-based resin (B)). The results are shown in Table 1.

[MFR (G/10 minutes)]

The branched polypropylene-based resin (A) and the linear polypropylene-based resin (B) were used as samples to determine the MFRs thereof by measurement carried out in conformity with the conditions of Procedure B described in ISO 1133 (1997). Melt Indexer S-01 (available from TOYO SEIKI SEISAKU-SHO, LTD) was used as a device to carry out measurement at a temperature of 230°C and a load of 2.16 kg. The MFR of the sample (the branched polypropylene-based resin (A) or the linear polypropylene-based resin (B)) may be a value obtained by conversion, from (i) a distance obtained by measurement of a distance traveled by a piston of the Melt Indexer S-01 during a certain period of time and (ii) a density of the sample at a temperature of the measurement, into a weight of the sample extruded through an orifice per 10 minutes. Note that the certain period of time was defined as 120 seconds in a case where the melt flow rate was more than 0.1 g/10 minutes and not more than 1.0 g/10 minutes, 60 seconds in a case where the melt flow rate was more than 1.0 g/10 minutes and not more than 3.5 g/10 minutes, or 30 seconds in a case where the melt flow rate was more than 3.5 g/10 minutes and not more than 30.0 g/10 minutes.

[Melt tension (cN)]

The melt tension of the branched polypropylene-based resin (A) was measured with use of a Capilograph 1D (available from TOYO SEIKI SEISAKU-SHO, LTD, Japan). Specifically, the melt tension was measured by the following (1) to (5): (1) a barrel which has a diameter of 9.55 mm and which had been heated to 200°C was filled with the branched polypropylene-based resin (A); (2) next, the branched polypropylene-based resin (A) was heated for 10 minutes in the barrel which had been heated to 200°C; (3) subsequently, while the sample resin was taken out in a strand shape from a capillary die (diameter: 1.0 mm, length: 10 mm) at a piston falling speed kept constant (10 mm/minute), this strand-like sample resin was caused to pass through a pulley which is for detecting a tension and which is located 350 mm below the capillary die, and then wind-up of the strand-like sample resin was started with use of a wind-up roll; (4) after take-off of the strand-like sample resin became stable, the wind-up speed of the strand-like sample resin was increased from an initial speed of 1.0 m/minute to a speed of 200 m/minute at a constant rate in 4 minutes; and (5) a load acting on the pulley, which is equipped with a load cell, at a time when the strand-like sample resin fractured was measured as the melt tension.

[Weight average molecular weight (Mw)]

The weight average molecular weight (Mw) of the linear polypropylene-based resin (B) was determined by a method of gel permeation chromatography (GPC). As a device used for GPC, Viscotek Triple HT-GPC model-SG system (available from Malvern Instruments Ltd.) was used. A specific measuring method was as follows: (1) the linear polypropylene-based resin (B) was dissolved in an eluent (orthodichlorobenzene (containing 0.05% butylated hydroxytoluene)) to prepare a sample solution containing 0.1% (weight/weight) of the linear polypropylene-based resin (B); and (2) 200 $\mu$l of the sample solution was caused to pass through a column (HR 3, 4, 6E available from Nihon Waters K.K.) at a flow rate of 0.3 ml/min and a temperature of 140°C to carry out GPC measurement. Here, polystyrene was used as a standard sample to determine the weight average molecular weight of the linear polypropylene-based resin (B) by comparison conversion. Detection was carried out by a reference flow method with use of a differential refractometer.

[Flexural modulus (MPa)]

The flexural modulus (MPa) of the linear polypropylene-based resin (B) was measured by a method in accordance with JIS K 7171.

[Tensile modulus (MPa)]

The tensile modulus (MPa) of the linear polypropylene-based resin (B) was measured by a method in accordance with JIS K 7161.

[Deflection temperature under load (°C)]

The deflection temperature under load (MPa) of the linear polypropylene-based resin (B) was measured by a method in accordance with JIS K 7191.

[Open cell ratio]

The open cell ratio of the polypropylene-based resin extruded expanded particles was determined by measurement with use of an air-comparison pycnometer [Model 1000, available from Tokyo-Science Co., Ltd.] in accordance with a method described in PROCEDURE C of ASTM D2856-87. More specifically, the open cell ratio of the extruded expanded particles was calculated by sequentially carrying out the following (1) to (3): (1) a volume Vc ($cm^3$) of the extruded expanded particles was measured with use of the air-comparison pycnometer; (2) subsequently, the whole extruded expanded particles whose Vc had been measured were submerged in ethanol contained in a graduated cylinder; (3) thereafter, an apparent volume Va ($cm^3$) of the extruded expanded particles was determined from the amount of increase in position of the ethanol in the graduated cylinder; and (4) the open cell ratio of the extruded expanded particles was calculated by the following expression:

$$\mathrm{Open\ cell\ ratio\ (\%) = ((Va\text{-}Vc) \times 100) / Va}$$

[Expansion ratio]

The expansion ratio of the polypropylene-based resin extruded expanded particles was calculated by the following method: (1) a weight w (g) of the extruded expanded particles was measured; (2) next, the extruded expanded particles used to measure the weight were submerged in ethanol in a graduated cylinder, and a volume v ($cm^3$) of the extruded expanded particles was measured on the basis of an increase in liquid surface position in the graduated cylinder; (3) the weight w (g) was divided by the volume v ($cm^3$), and a density $\rho_1$ of the extruded expanded particles was calculated; and (4) a density $\rho_2$ of a base resin of the extruded expanded particles was divided by the density $\rho_1$ of the extruded expanded particles ($\rho_2/\rho_1$), and a resulting value was defined as the expansion ratio. The density $\rho_2$ of the base resin was a density of 0.9 $g/cm^3$ of a common polypropylene-based resin.

(Materials)

The following materials were used in Examples and Comparative Examples.

(Branched polypropylene-based resin (A))

The branched polypropylene-based resin (A) (PP-A1) produced on the basis of the following Production Examples was used. Physical properties of the PP-A1 were measured by the above-described method. The results are shown in Table 1.

(Linear polypropylene-based resin (B))

PP-B1; Random polypropylene (B221WC) available from Prime Polymer Co., Ltd
PP-B2; Random polypropylene (PB222A) available from SunAllomer Ltd.
PP-B3; Random polypropylene (EG8B) available from Japan Polypropylene Corporation
PP-B4; Random polypropylene (E222) available from Prime Polymer Co., Ltd
PP-B5; Random polypropylene (B241) available from Prime Polymer Co., Ltd

PP-B1 to PP-B5 were each a propylene/ ethylene random copolymer containing 0.5% by weight to 5.0% by weight of ethylene units in 100% by weight of the copolymer. Physical properties of each of the resins were measured by the above-described method. The results are shown in Table 1.

(Cell adjusting agent)

Talc (PK-S available from Hayashi-Kasei Co., Ltd.)

(Production Example 1: production of branched polypropylene-based resin (PP-A1))

As a raw material resin, a propylene/ethylene random copolymer available from Prime Polymer Co., Ltd. (ethylene content: 2.0%, MFR: 7.0 g/10 minutes, melting point: 144°C), which is a linear polypropylene-based resin, was used. As a radical polymerization initiator, a mixture (radical polymerization initiator mixture) obtained by mixing t-butyl peroxyisopropylmonocarbonate (PERBUTYL (registered trademark) I available from NOF CORPORATION) and 2,2-di-tert-butylperoxybutane (Trigonox D-T50 available from KAYAKU AKZO CO., LTD.) at a weight ratio of 2:1 was used. A mixture of 100 parts by weight of the linear polypropylene-based resin and 0.7 parts by weight of the radical polymerization initiator mixture was fed, at 70 kg/hour, through a hopper to a twin screw extruder (L/D = 40) having a diameter φ of 45 mm. Next, while the raw material in the extruder was melted and kneaded at a cylinder temperature of 220°C and a rotational speed of 230 rpm, from an injection part provided in the middle of the twin screw extruder, 0.38 parts by weight of isoprene, serving as a conjugated diene, with respect to 100 parts by weight of the linear polypropylene-based resin was fed as a monomer with use of a metering pump, so that a mixture was prepared (completed) in the extruder. Subsequently, the mixture in the extruder was further melted and kneaded, and a melted and kneaded product of the mixture, that is, a branched polypropylene-based resin was thus obtained. Thereafter, the branched polypropylene-based resin (melted and kneaded product) was discharged in strand form through a die provided in the device. Then, the discharged branched polypropylene-based resin (PP-A1) in the form of strands was cooled and chopped, so that pellets of the branched polypropylene-based resin were obtained.

(Production Example 2: production of branched polypropylene-based resin (PP-A2))

As a raw material resin, a propylene/ethylene random copolymer available from Borouge (ethylene content: 1.9%, MFR: 8.0 g/10 minutes, melting point: 150°C), which is a linear polypropylene-based resin, was used. As a radical polymerization initiator, the radical polymerization initiator mixture used in Production Example 1 (production of PP-A1) was used. A mixture of 100 parts by weight of the linear polypropylene-based resin and 0.7 parts by weight of the radical polymerization initiator mixture was fed, at 70 kg/hour, through a hopper to a twin screw extruder (L/D = 40) having a diameter φ of 45 mm. Next, while the raw material in the extruder was melted and kneaded at a cylinder temperature of 220°C and a rotational speed of 230 rpm, from an injection part provided in the middle of the twin screw extruder, 0.39 parts by weight of isoprene, serving as a conjugated diene, with respect to 100 parts by weight of the linear polypropylene-based resin was fed as a monomer with use of a metering pump, so that a mixture was prepared (completed) in the extruder. Subsequently, the mixture in the extruder was further melted and kneaded, and a melted and kneaded product of the mixture, that is, a branched polypropylene-based resin was thus obtained. Thereafter, the branched polypropylene-based resin was discharged in strand form through a die provided in the device. Then, the discharged branched polypropylene-based resin in the form of strands was cooled and chopped, so that pellets of the branched polypropylene-based resin were obtained.

[Table 1]

(Table 1)

| Type | Melting point (°C) | MFR (g/10 minutes) | Melt tension (cN) | Weight average molecular weight (Mw) | Flexural modulus (MPa) | Tensile modulus (MPa) | Deflection temperature under load (°C) |
|---|---|---|---|---|---|---|---|
| PP-A1 | 147 | 5.61 | 9.21 | - | - | - | - |
| PP-A2 | 150 | 3.09 | 10.41 | - | - | - | - |
| PP-B1 | 145 | 0.56 | - | 650017 | 1050 | 1050 | 90 |
| PP-B2 | 148 | 0.67 | - | 594522 | 1060 | 1000 | 87 |
| PP-B3 | 142 | 0.64 | - | 554069 | 900 | 850 | 75 |
| PP-B4 | 143 | 1.56 | - | 462914 | 1000 | 1000 | 80 |
| PP-B5 | 141 | 0.48 | - | 315228 | 770 | 750 | 75 |

(Example 1)

(First step)

A resin composition was obtained by mixing 50 parts by weight of the branched polypropylene-based resin (A) (PP-A1), 50 parts by weight of the linear polypropylene-based resin (B) (PP-B1), and 0.02 parts by weight of talc (PK-S, available from Hayashi-Kasei Co., Ltd.). The obtained resin composition was fed, at 1.0 kg/hour, through a hopper to a twin screw extruder (L/D = 30) having a diameter $\varphi$ of 15 mm. Next, the resin composition in the extruder was melted and kneaded at a cylinder temperature of 180°C and a rotational speed of 80 rpm. While the resin composition was thus melted and kneaded, 6.25 parts by weight of carbon dioxide, serving as a blowing agent, with respect to 100 parts by weight of a total of the branched polypropylene-based resin (A) and the linear polypropylene-based resin (B) was fed, with use of a metering pump, from an injection part provided in the middle of the extruder. Subsequently, the resin composition containing the blowing agent was further melted and kneaded, so that a melted and kneaded product of the resin composition was obtained.

Furthermore, the melted and kneaded product of the resin composition was caused to pass through a melt cooler connected to a tip of the twin screw extruder and set at a temperature shown in Table 2, so that the melted and kneaded product was cooled. Thereafter, an expanded product in the form of strands obtained by extruding the melted and kneaded product into atmospheric pressure through a die (set at a temperature shown in Table 2) mounted on a tip of the melt cooler and provided with two small holes each having a diameter of 0.7 mm was cut with use of a razor 5 mm wide, so that polypropylene-based resin expanded particles were obtained.

The open cell ratio of the extruded expanded particles thus obtained were evaluated by the above-described method. The results are shown in Table 2.

(Example 2 and Comparative Examples 1 to 3)

Polypropylene-based resin extruded expanded particles were obtained by a method identical to the method in Example 1, except that in Example 1, (a) as the linear polypropylene-based resin (B), a resin shown in Table 2 was used instead of PP-B1, and (b) the temperatures of the melt cooler and the die were changed to respective temperatures shown in Table 2.

(Comparative Example 4)

Polypropylene-based resin extruded expanded particles were obtained by a method identical to the method in Example 1, except that in Example 1, (a) only the branched polypropylene-based resin (A) (PP-A2) was used, and the linear polypropylene-based resin (B) was not used, and (b) the temperatures of the melt cooler and the die were changed to respective temperatures shown in Table 2.

[Table 2]

(Table 2)

| | Blending | | | | Extrusion condition | Physical properties | |
|---|---|---|---|---|---|---|---|
| | Branched polypropylene-based resin (A) | | Linear polypropylene-based resin (B) | | Melt cooler, die temperature (°C) | Extruded expanded particles | |
| | Type | Blending ratio (% by weight) | Type | Blending ratio (% by weight) | | Open cell ratio (%) | Expansion ratio (-) |
| Example 1 | PP-A1 | 50 | PP-B1 | 50 | 150 | 33.8 | 20.1 |
| Example 2 | PP-A1 | 50 | PP-B2 | 50 | 150 | 34.7 | 20.9 |
| Comparative Example 1 | PP-A1 | 50 | PP-B3 | 50 | 150 | 48.9 | 19.4 |
| Comparative Example 2 | PP-A1 | 50 | PP-B4 | 50 | 142 | 45.4 | 20.1 |
| Comparative Example 3 | PP-A1 | 50 | PP-B5 | 50 | 150 | 44.2 | 17.9 |
| Comparative Example 4 | PP-A2 | 100 | - | 0 | 141 | 32.7 | 21.6 |

The extruded expanded particles of each of Examples 1 and 2 were obtained by using, as the polypropylene-based resin, not only the branched polypropylene-based resin (A) but also the linear polypropylene-based resin (B) that has a configuration within the scope of an embodiment of the present invention. In contrast, the extruded expanded particles of Comparative Example 4 were obtained by using only the branched polypropylene-based resin (A) as the polypropylene-based resin. It is understood from Table 2 that the extruded expanded particles of each of Examples 1 and 2 have an open cell ratio substantially equal to that of the extruded expanded particles of Comparative Example 4, that is, a low open cell ratio.

The extruded expanded particles of each of Comparative Examples 1 to 3 were obtained by using, as the polypropylene-based resin, not only the branched polypropylene-based resin (A) but also the linear polypropylene-based resin (B) that has a configuration outside the scope of an embodiment of the present invention. It is understood from Table 2 that the extruded expanded particles of each of Comparative Examples 1 to 3 have a remarkably high open cell ratio as compared with the extruded expanded particles of Comparative Example 4.

Industrial Applicability

According to an embodiment of the present invention, it is possible to provide polypropylene-based resin extruded expanded particles that make it possible to provide a polypropylene-based resin foamed molded product having excellent resistance to breakage. Thus, an embodiment of the present invention can be suitably used in the fields of, for example, automotive interior materials, shock-absorbing materials, packaging materials, and heat insulating materials.

**Claims**

1. Polypropylene-based resin extruded expanded particles obtained by extrusion expansion of a resin composition that contains a polypropylene-based resin (A) which has a branched structure and a polypropylene-based resin (B) in which a branched structure is not introduced, wherein
the polypropylene-based resin (B) in which a branched structure is not introduced has a weight average molecular weight of not less than 500,000 and a flexural modulus of not less than 950 MPa.

2. The polypropylene-based resin extruded expanded particles according to claim 1, wherein the polypropylene-based resin (B) has a tensile modulus of not less than 900 MPa.

3. The polypropylene-based resin extruded expanded particles according to claim 1 or 2, wherein the polypropylene-based resin (B) has a deflection temperature under load of not lower than 82°C.

4. The polypropylene-based resin extruded expanded particles according to any one of claims 1 to 3, wherein the polypropylene-based resin (A) has a melt tension of not less than 1.00 cN at 200°C.

5. The polypropylene-based resin extruded expanded particles according to any one of claims 1 to 4, wherein the polypropylene-based resin (A) has a melting point of 125°C to 170°C.

6. The polypropylene-based resin extruded expanded particles according to any one of claims 1 to 5, wherein the polypropylene-based resin (A) has a melt flow rate (MFR) of 0.50 g/10 minutes to 20.00 g/10 minutes at 230°C.

7. The polypropylene-based resin extruded expanded particles according to any one of claims 1 to 6, wherein the polypropylene-based resin (B) has a melting point of 125°C to 170°C.

8. The polypropylene-based resin extruded expanded particles according to any one of claims 1 to 7, wherein the polypropylene-based resin (B) has a melt flow rate (MFR) of 0.20 g/10 minutes to 20.00 g/10 minutes at 230°C.

9. The polypropylene-based resin extruded expanded particles according to any one of claims 1 to 8, wherein the polypropylene-based resin (A) and the polypropylene-based resin (B) are contained in the resin composition at a weight ratio (weight of the polypropylene-based resin (A) : weight of the polypropylene-based resin (B)) of 20:80 to 80:20.

10. The polypropylene-based resin extruded expanded particles according to any one of claims 1 to 9, wherein the polypropylene-based resin extruded expanded particles have an open cell ratio of not more than 44.0%.

11. The polypropylene-based resin extruded expanded particles according to any one of claims 1 to 10, wherein the polypropylene-based resin extruded expanded particles have an expansion ratio of 3 times to 24 times.

12. A polypropylene-based resin foamed molded product obtained by molding polypropylene-based resin extruded expanded particles according to any one of claims 1 to 11.

13. A method of producing polypropylene-based resin extruded expanded particles,
said method comprising:

a first step of melting and kneading (i) a resin composition that contains a polypropylene-based resin (A) which has a branched structure and a polypropylene-based resin (B) in which a branched structure is not introduced and (ii) a blowing agent in a production device; and
a second step of discharging, through a die to a region having a pressure lower than an internal pressure of the production device, a melted and kneaded product obtained in the first step, wherein
the polypropylene-based resin (B) in which a branched structure is not introduced has a weight average molecular weight of not less than 500,000 and a flexural modulus of not less than 950 MPa.

14. The method according to claim 13, wherein the polypropylene-based resin (B) has a tensile modulus of not less than 900 MPa.

15. The method according to claim 13 or 14, wherein the polypropylene-based resin (B) has a deflection temperature under load of not lower than 82°C.

## INTERNATIONAL SEARCH REPORT

International application No.

**PCT/JP2022/015294**

### A. CLASSIFICATION OF SUBJECT MATTER

*C08J 9/16*(2006.01)i
FI:   C08J9/16 CES

According to International Patent Classification (IPC) or to both national classification and IPC

### B. FIELDS SEARCHED

Minimum documentation searched (classification system followed by classification symbols)

C08J9/00-9/42; B29C44/00-44/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-256460 A (KANEKA CORP) 05 November 2009 (2009-11-05)<br>entire text | 1-15 |
| A | WO 2014/084165 A1 (KANEKA CORP) 05 June 2014 (2014-06-05)<br>entire text | 1-15 |
| A | US 2002/0151611 A1 (THOEN, Johan A.) 17 October 2002 (2002-10-17)<br>entire text | 1-15 |
| P, A | WO 2021/172016 A1 (KANEKA CORP) 02 September 2021 (2021-09-02)<br>entire text | 1-15 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/015294**

| Patent document cited in search report | | | Publication date (day/month/year) | Patent family member(s) | | | Publication date (day/month/year) |
|---|---|---|---|---|---|---|---|
| JP | 2009-256460 | A | 05 November 2009 | (Family: none) | | | |
| WO | 2014/084165 | A1 | 05 June 2014 | US | 2015/0284526 | A1 | |
| | | | | EP | 2927270 | A1 | |
| | | | | CN | 104797643 | A | |
| US | 2002/0151611 | A1 | 17 October 2002 | WO | 2002/051890 | A1 | |
| | | | | EP | 1390416 | A1 | |
| WO | 2021/172016 | A1 | 02 September 2021 | (Family: none) | | | |

Form PCT/ISA/210 (patent family annex) (January 2015)

**REFERENCES CITED IN THE DESCRIPTION**

**Patent documents cited in the description**

- JP 9249763 A
- JP 2000159950 A
- JP 2002542360 W
- WO 2020004429 A